# EUROPÄISCHE PATENTSCHRIFT

(11) **EP 3 319 420 B1**
(45) Veröffentlichungstag und Bekanntmachung des Hinweises auf die Patenterteilung: **23.10.2019**
(21) Anmeldenummer: 16751158.3
(22) Anmeldetag: 22.06.2016
(51) Int. Cl.: A01M 29/30, A01M 29/34, A01M 1/00

(54) **VORRICHTUNGEN ZUR VERTREIBUNG ODER VERNICHTUNG VON SCHÄDLINGEN**
DEVICES FOR DRIVING AWAY OR EXTERMINATING PESTS
DISPOSITIFS POUR EXPULSER OU DÉTRUIRE DES PARASITES

(30) Priorität: 07.07.2015 DE 102015110989
(43) Veröffentlichungstag der Anmeldung: 16.05.2018
(73) Patentinhaber: Bartscher Innovationstechnologien GmbH, 50933 Köln (DE)
(72) Erfinder: BARTSCHER, Gerhard, 50933 Köln (DE)
(74) Vertreter: Fleuchaus, Michael A.
(86) Internationale Anmeldenummer: PCT/DE2016/100283
(87) Internationale Veröffentlichungsnummer: WO 2017/005242

(56) Entgegenhaltungen:
- DE-A1- 4 444 295
- DE-A1- 19 640 643
- DE-A1- 19 932 015
- DE-A1-102004 058 275
- DE-U1- 20 210 457
- US-A1- 2006 086 823
- US-A1- 2009 084 023
- US-A1- 2009 241 410

## Beschreibung

Die vorliegende Erfindung betrifft Vorrichtungen zur Vernichtung und/oder Vertreibung von Schädlingen, insbesondere von Insekten, bevorzugt von Mücken und Fliegen.

Marktübliche Fallen für Insekten sind typischerweise "Kästen", die die Insekten über UV-Licht und ggf. Wärme und/oder Pheromone anlocken. Zum Festhalten bzw. Vernichten sind drei Mechanismen gebräuchlich: elektrisch geladene Gitter, Klebefolien und Ansaugen.

Alle genannten Varianten haben nur eine begrenzte Wirksamkeit. So lassen sich z. B. Mücken nur sehr schlecht über die genannten Verfahren anlocken, und es werden vermehrt auch nützliche Insekten vernichtet.

Weiterhin sind sowohl Insektenspray (z. B. in Sprühdosen) als auch Geräte gebräuchlich, die Insektizide über einen längeren Zeitraum verdampfen. Wesentlicher Nachteil bei beiden Systemen ist die Exposition des Menschen gegen das häufig auch für Menschen auf Dauer schädliche Insektizid.

In der Patentliteratur werden diverse Verfahren und Geräte zur Vernichtung von Insekten beschrieben.

Die CN000002432784Y beschreibt eine Sprühpistole mit einem Vorratsbehälter, die mit heißem Wasser zur Vernichtung von Insekten operiert. Die Einrichtung muss durch einen Menschen betrieben werden. Außerdem ist die Menge des versprühten Wassers so hoch, dass bei unsachgemäßer Handhabung Menschen zu Schaden kommen können.

Aus der CN000102893979A ist ein Detektor bekannt, der bei einem Gartenteich auf das Geräusch von Moskitos reagiert und einen Wassernebel zum Vertreiben und/oder Töten der Moskitos generiert.

Zwar handelt es sich hier um ein automatisch operierendes System, aber die Menge des verwendeten Wassers verbietet typischerweise einen Einsatz im Innern von Gebäuden. Außerdem ist die Wassermenge auch für in der Nähe befindliche Menschen unangenehm.

Die JP2007252274 beschreibt eine Art "Kanone", die (z. B. über eine Kamera) ferngesteuert gezielt wahlweise Insektizid, Rauch oder beides verschießt. Auch diese Vorrichtung weist den Nachteil der Verwendung von größeren und damit potenziell schädlichen Mengen von Insektizid auf.

Die DE10200600273B3 offenbart Verfahren und Vorrichtungen zur Manipulation eines Fluginsekts. Dabei erfolgt eine akustische Überwachung eines Raumbereiches auf ein Vorhandensein eines Fluginsekts, wobei für das Fluginsekt charakteristische Geräuschfrequenzen erkannt werden. Dann erfolgt ein Abschuss z. B. über zwei Laserstrahlen.

Folgende weitere Patentschriften lehren den Einsatz von Laserstrahlen zum Zweck der Insektenbekämpfung:
WO2012171445, KR102010036417, US020130167429, US53435652, DE3825389 und JP000H06197674.

US2006/0086823 A1, DE20210457 U1 und DE19640643 A1 lehren den Einsatz von Wasserstrahlen zum Zweck der Insekten- und Vogelbekämpfung.

Zwar werden in den genannten Schriften Maßnahmen beschrieben, um eine Gefährdung von Menschen zu minimieren, aber es verbleibt ein Restrisiko, da Strahlen mit ausreichender Energie zur Vernichtung oder Vertreibung von Schädlingen auch für Menschen gefährlich werden können, insbesondere für die Augen.

Es besteht daher ein Bedarf an technischen Lösungen zur Bekämpfung von Schädlingen, speziell von Insekten, die die Nachteile des Standes der Technik vermeiden.

Überraschenderweise wurde gefunden, dass sich Schädlinge, insbesondere Insekten vernichten und/oder vertreiben lassen, indem man sie mit einzelnen sehr kleinen Tropfen beschießt.

Gegenstand der vorliegenden Erfindung ist daher eine Vorrichtung zur Vernichtung oder Vertreibung von Schädlingen mit den Merkmalen des Anspruchs 1, wobei sie mit mindestens einem einzelnen sehr kleinen Tropfen den Schädling trifft und dadurch die gewünschte Wirkung der Vertreibung oder Vernichtung erzielt.

Der wesentliche Erfindungsgedanke besteht darin, einzelne kleine Tropfen zur Vernichtung oder Vertreibung von Schädlingen zu verwenden. Eine Gefährdung von Menschen wird hierbei vorteilhafterweise vermieden.

Zur Erzeugung von einzelnen Tropfen können insbesondere Technologien zum Einsatz kommen, wie sie bei Druckköpfen für den sogenannten Tintenstrahldruck zum Einsatz kommen. Der Tintenstrahldruck ist eines der dominierenden Druckverfahren für den Digitaldruck, so dass entsprechende Einheiten zur Erzeugung von einzelnen mikroskopisch kleinen Tropfen in großer Zahl, in diversen Varianten und kostengünstig verfügbar sind.

Erfindungsgemäß lassen sich zwei grundsätzliche Ausführungsformen unterscheiden:
A: Tötung oder Vertreibung von Schädlingen durch einen einzelnen sehr kleinen Tropfen mit hoher Geschwindigkeit über den physikalischen Aufprall. Als Flüssigkeit kann hierbei insbesondere reines Wasser zum Einsatz kommen. Dies hat den Vorteil keinerlei toxikologische Nebenwirkungen zu haben.
B: Tötung oder Vertreibung von Schädlingen durch einen einzelnen sehr kleinen Tropfen mit einem Insektizid (oder einer anderen Flüssigkeit mit besonderer Funktionalität). Der wesentliche Vorteil gegenüber dem Stand der Technik besteht darin, dass die verwendete Menge an Insektizid extrem gering ist, so dass keine Gefahr für Menschen besteht.

Folgende Betrachtung verdeutlicht diesen wichtigen Aspekt: Eine handelsübliche Sprühdose mit Insektenspray enthält z. B 250 ml Insektizid und reicht für grob 100 Sprühstöße, d. h. es werden ca. 2,5 ml Insektizid pro Sprühstoß verteilt. Beim Tintenstrahldruck sind Tropfengrößen im Bereich von 1 pl bis 100 pl üblich, d. h. selbst bei einer Tropfengröße von 100 pl braucht es 2,5x10⁷ dieser Tropfen, um die Menge eines einzigen Sprühstoßes einer Sprühdose mit Insektenspray zu erreichen.

Der Begriff "Schädling" ist im Rahmen des Erfindungsgedankens allgemein als unerwünschtes Tier zu verstehen. Konkrete (aber nicht einschränkende) Beispiele sind insbesondere Insekten, dabei besonders Fluginsekten wie Mücken oder Fliegen, aber auch Vögel oder Nager.

Für die Flüssigkeit nach grundsätzlicher Ausführungsform B können je nach Anwendungsgebiet verschiedene Additive zum Einsatz kommen. Bereits erwähnt wurde ein Insektizid. Dabei werden Art und Wirksamkeit des Insektizids auf Tropfengröße und Art des Schädlings angepasst.

Erfindungsgemäß geeignete Insektizide sind beispielsweise:
- Chlorierte Insektizide wie etwa Camphechlor, DDT, Hexachlorocyclohexane, gamma-Hexachlorocyclohexane, Methoxychlor, Pentachlorophenol, TDE, Aldrin, Chlordane, Chlordecone, Dieldrin, Endosulfan, Endrin, Heptachlor, Mirex und deren Gemische;
- Organophosphor Insektizide, wie etwa Acephate, Azinphos-methyl, Bensulide, Chlorethoxyfos, Chlorpyrifos, Chlorpyriphos-methyl, Diazinon, Dichlorvos (DDVP), Dicrotophos, Dimethoate, Disulfoton, Ethoprop, Fenamiphos, Fenitrothion, Fenthion, Fosthiazate, Malathion, Methamidophos, Methidathion, Methyl-parathion, Mevinphos, Naled, Omethoate, Oxydemeton-methyl, Parathion, Phorate, Phosalone, Phosmet, Phostebupirim, Pirimiphos-methyl, Profenofos, Terbufos, Tetrachlorvinphos, Tribufos, Trichlorfon und deren Gemische;
- Carbamate wie etwa, Aldicarb, Carbofuran, Carbaryl, Methomyl, 2-(1-Methylpropyl)phenyl methylcarbamate und deren Gemische;
- Pyrethroide wie etwa, Allethrin, Bifenthrin, Deltamethrin, Permethrin, Resmethrin, Sumithrin, Tetramethrin, Tralomethrin, Transfluthrin und deren Gemische;
- Pflanzliche Toxine wie etwa, Derris (rotenone), Pyrethrum, Neem (Azadirachtin), Nikotin, Koffein und deren Gemische.

Im Rahmen der vorliegenden Erfindung ist auch der Einsatz alternativer Funktionalitäten möglich, wie z. B. ein klebriges Material, welches die Flügel eines Fluginsektes verklebt oder die Atemöffnungen in erheblichem Umfang verschließt. Allgemein sind hier Materialien einsetzbar, die, da sie gezielt in einer sehr geringen Menge direkt auf den Schädling aufgebracht werden, dort eine für den Schädling schädliche Wirkung entfalten, während sie für den Menschen in den geringen Mengen völlig unschädlich sind.

Entsprechend dem Stand der Technik z. B. beim Tintenstrahldruck können der Flüssigkeit auch weitere funktionale Additive zugesetzt werden. Dies sind z. B. Tenside, die die Oberflächenspannung der Flüssigkeit so einstellen, dass beim Ausstoß optimale Tropfen geformt werden.

Ein wesentlicher Aspekt bei beiden grundsätzlichen Ausführungsformen ist, dass der Tropfen gezielt den Schädling trifft. Dies wird in einem drei Schritte umfassenden Verfahren bewirkt:
1. Erfassung der Position des Schädlings
2. Berechnung der für den Abschuss notwendige Aktionen
3. Abschuss

Bezogen auf die vorliegende Erfindung ergeben sich folgende Realisierungsmöglichkeiten für Schritt 1:
Der Stand der Technik beinhaltet eine Vielzahl von Möglichkeiten zur Erfassung der Position von Schädlingen. Konkrete Beispiele sind optische, akustische und kapazitive Systeme.

Zu den optischen Systemen gehören beispielsweise Kameras (insbesondere CCD Kameras, als 2D-Chip oder als Zeile, typisch mit mindestens zwei Kameras für eine räumliche Erfassung, ggf. mit Bilderkennungsverfahren) und Scanner (insbesondere Laser Scanner). Auch einfachere Anlagen wie Lichtschranken können zum Einsatz kommen. Hier können verschiedene Wellenlängen eingesetzt werden. Besonders vorteilhaft ist hier der für das menschliche Auge nicht sichtbare IR-Bereich.

Bei akustischen Systemen gibt es aktive und passive Elemente. Zu den passiven gehören Mikrofone. Bei der Auswertung der Signale können insbesondere für Fluginsekten charakteristische Frequenzen wie der Flügelschlag von Mücken oder Fliegen ausgewertet werden. Bei aktiven akustischen Systemen wird meist Ultraschall eingesetzt. Ein Signalgeber sendet eine akustische Welle aus. Entsprechende Detektoren erfassen die Reflexion vom Objekt und ermöglichen über eine geeignete Signalverarbeitung eine Bestimmung der räumlichen Position. In der Natur setzen Fledermäuse solche Systeme ein.

Kapazitive Systeme ermöglichen typischerweise nur eine wesentlich ungenauere Positionserfassung, was aber für eine der weiter unten beschriebenen Ausführungsformen völlig ausreicht. Hier können ähnliche Technologien zum Einsatz kommen, wie sie Stand der Technik bei Smartphones sind.

Zur weiteren Erklärung des Erfindungsgedankens werden im Folgenden einzelne bevorzugte Ausführungsformen mit Zeichnungen genau beschrieben, hier tendenziell in der Reihenfolge nach steigender Komplexität.

### Ausführungsform a: Balken

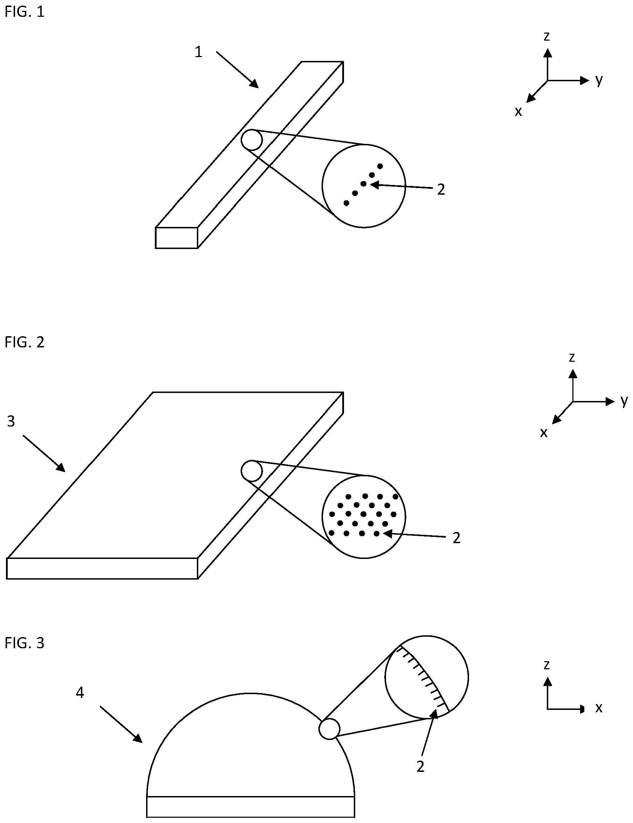

Fig. 1 zeigt ein Gerät entsprechend dem Erfindungsgedanken in Form eines Balkens (1), d. h. im Sinne des Erfindungsgedankens einer im Wesentlichen linearen Anordnung. Anhand dieser speziellen Ausführungsform werden auch eine Reihe von allgemeineren Aspekten des Erfindungsgedankens erläutert. Für eine anschauliche Darstellung wird hier ein Beispiel eines Balkens (1) mit einer Länge von 0,5 m, einer Breite von 10 mm und einer Dicke von 5 mm gewählt. Auf der Oberseite des Balkens befinden sich eine Vielzahl von sehr kleinen Düsen (2), wie sie beispielsweise aus dem Tintenstrahldruck bekannt sind. Diese sind in Fig. 1 in einer Ausschnittsvergrößerung schematisch dargestellt. Der Durchmesser der Austrittsöffnung der Düsen liegt typischerweise im Bereich von 10 bis 100 µm. Da die Herstellung von einzelnen Düsen bei Anlehnung an Technologien aus dem Tintenstrahldruck vergleichsweise preiswert ist, kann eine hohe Anzahl solcher Düsen verwendet werden. So können die Düsen z. B. in einem Abstand von ca. 2 mm angeordnet werden. Bei einer Länge von 0,5 m ergeben sich ca. 250 Düsen für den gesamten Balken. Erfindungsgemäß geeignete Düsen bzw. Düsenfelder können ähnlich aufgebaut sein wie die kommerziell verfügbaren Druckköpfe für den Tintenstrahldruck, beispielsweise die Typen 126 und 128 der Firma Xaar oder die Serie KJ4B der Firma Kyocera.

Bei einer wesentlichen Ausführungsform wird die Richtung, in die die Tropfen von dem Balken ausgestoßen werden, mit der Konstruktion festgelegt. In den meisten Fällen wird sie senkrecht zur Oberseite des Balkens sein, d. h. in z-Richtung in Fig. 1. Um einen größeren Raumbereich zu erfassen, können die Düsen auch in unterschiedlichen Winkeln angeordnet werden. Je nach Anwendungszweck sind für den Fachmann entsprechende Anordnungen einfach zu bestimmen.

Mit den weiter oben beschriebenen Technologien wird die Position des Schädlings erfasst (entsprechende Sensoren und eine oder mehrere Steuerungseinheiten sind nicht in Fig. 1 dargestellt; es können auch ein oder mehrere externe Einheiten eingesetzt werden). Wenn der Schädling in den Erfassungsbereich des Balkens kommt, wird berechnet, welche der zur Verfügung stehenden Düsen die höchste Trefferwahrscheinlichkeit aufweist. Dabei kann eine Vielzahl von Parametern berücksichtigt werden, wie z. B. die Position des Balkens im Verhältnis zum Schädling, Bewegungsrichtung, Geschwindigkeit und typische Bewegungsmuster des Schädlings sowie Luftbewegungen im Raum. Die optimale Düse wird dann aktiviert und erzeugt einen einzelnen Tropfen, der den Schädling trifft und dort die gewünschte Wirkung erzielt. Die Steuerung läuft (nach Voreinstellung von Basisparametern) automatisch ohne menschliche Mitwirkung.

Auch die Anwesenheit von Menschen kann berücksichtigt werden. Zwar ist es durch den beschriebenen Erfindungsgedanken für Menschen unschädlich, wenn Sie von einem oder mehreren Tropfen getroffen werden, aber wiederholt größere und schnellere Tropfen können als störend empfunden werden. So kann z. B. der Abschuss des Tropfens verzögert oder ganz abgebrochen werden, wenn sich ein Mensch in Reichweite der Tropfen befindet. Eine weitere Maßnahme zur Minimierung einer möglichen Belästigung von Menschen besteht darin, dass die Steuerung so eingestellt ist, dass sie in einem definierten Zeitintervall nur eine begrenzte Anzahl von Tropfen ausstößt, z. B. nur ein Tropfen innerhalb einer Minute. Dies führt gleichzeitig zu einer Minimierung des Verbrauchs an Flüssigkeit.

Vorzugsweise wird das Sensor-Steuerungssystem so eingestellt, dass es nicht auf stationäre Ziele feuert.

Düsen aus dem Tintenstrahldruck sind äußerst klein, so dass eine kompakte Bauform wie in der hier beschriebenen Ausführungsform erreicht wird. Im Innern oder unterhalb des Balkens 1 befindet sich vorzugsweise ein Reservoir mit der zu verwendenden Flüssigkeit (hier nicht dargestellt). Hier können insbesondere einfach vom Benutzer auszuwechselnde Patronen eingesetzt werden. Die gesamte Einheit arbeitet mit einer Energieversorgung, z. B. über einen Netzanschluss oder auch Batterien oder Akkus. Bei Außenanwendungen ist eine Kombination mit einem Solarmodul vorteilhaft.

Der beschriebene Balken kann an einer beliebigen Stelle innerhalb eines geschlossenen Raumes angebracht werden, insbesondere an Wänden und Decken. Besonders vorteilhaft ist eine Anbringung an der Decke, da dann die Tropfen im Wesentlichen nach unten geschossen werden, so dass die Erdanziehungskraft die Tropfen zusätzlich beschleunigt.

Auch die Anbringung von mehreren Geräten im Raum verteilt ist denkbar.

Je nach Anwendungszweck kann der Balken auch im Außenbereich verwendet werden. Ein Beispiel dafür wären Teile der Außenbereiche von Gebäuden, von denen Tauben ferngehalten werden sollen. Im Fall von Tauben sollte der Balken nur auf "vertreiben" eingestellt werden. Für die Anwendung bei Nagern ist eine Anbringung in Bodennähe vorteilhaft.

Auch eine Anbringung einer mobilen Variante an Kleidungsstücken wie z. B. einem Gürtel oder einem Hut ist möglich.

In einer weiteren Variante wird der Balken über Aktuatoren in einer oder mehreren Raumrichtungen bewegt, geneigt oder gedreht. Die Bewegung kann kontinuierlich oder in definierten Schritten erfolgen. Ein Beispiel für definierte Schritte ist die Bewegung des Balkens um die Hälfte des Rastermaßes in Längsrichtung. Bei der hier konkret beschriebenen Ausführungsform mit einer Länge von 0,5 m und Düsen in einem Abstand von 2 mm wäre ein solcher Schritt 1 mm. Je nach Art der Bewegung und mit der entsprechenden Steuerung werden durch die Bewegung des Balkens der erfasste Raumbereich und die Trefferwahrscheinlichkeit erhöht. Vorzugsweise erfolgt nur eine geringe Bewegung, um die kompakte Bauform zu erhalten. Eine Ausnahme bilden hier Drehbewegungen um die Längsachse (die x-Achse in Fig. 1), die große Drehungen bei Beibehaltung einer kompakten Bauform erlauben.

Die Geschwindigkeit der Bewegung erfolgt vorzugsweise schnell im Vergleich zur Bewegungsgeschwindigkeit des jeweiligen Schädlings.

In einer weiteren Variante erfolgt der Abschuss des Tropfens in einem Zeitintervall, in dem sich die Düsenanordnung bewegt. Darüber kann dem Tropfen eine weitere Bewegungskomponente gegeben werden, die auch den räumlichen Erfassungsbereich und die Trefferwahrscheinlichkeit erhöht.

Sowohl für die hier beschriebene als auch für die meisten der nachfolgend beschriebenen Ausführungsformen ist ein wichtiger physikalischer Aspekt zu beachten: Die Reichweite von sehr kleinen Tropfen im Sinne des Erfindungsgedankens in Luft ist begrenzt. Wenn ein Tropfen mit einer Anfangsgeschwindigkeit v₀ startet, dann sinkt diese Geschwindigkeit (etwas vereinfacht) durch Reibung mit der Luft. Eine wesentliche Einflussgröße ist der Tropfendurchmesser. Je kleiner der Tropfen, desto geringer die Reichweite.

Je nach Anwendung ist eine Erhöhung der Reichweite wünschenswert. Dies lässt sich durch folgende Maßnahmen erzielen:
- Wie oben aufgeführt, Vergrößerung des Tropfendurchmessers
- Bewegung der Tropfen nach unten (Schwerkraft)
- Erhöhung der Anfangsgeschwindigkeit v₀
- Erhöhung der Dichte der im Tropfen verwendeten Flüssigkeit

Selbstverständlich ist auch eine Kombination von verschiedenen dieser Möglichkeiten vorteilhaft.

In einer weiteren Variante der hier beschriebenen Ausführungsform a können zur Erhöhung der Trefferwahrscheinlichkeit mehrere Düsen gleichzeitig aktiviert werden. In einer weiteren Variante wird die genaue Anzahl der aktivierten Düsen von der Steuerung an die aktuellen Gegebenheiten angepasst.

In noch einer weiteren, bevorzugten Variante wird eine Vielzahl von Düsen bis hin zu allen Düsen gleichzeitig aktiviert. Je nach Ausführungsform können auch Gruppen aktiviert werden.

In dieser bevorzugten Variante kann der Balken nur einen kleinen Wirkungsbereich haben, beispielsweise einen Bereich von ca. 0,5 m (x-Richtung) x 2 mm (y-Richtung) x 5 cm (z- Richtung). Wenn die Sensoren z. B. eine Mücke in diesem Bereich erfassen, werden alle Düsen ausgelöst. Dieses System erfordert nur eine sehr einfache Steuerungseinheit und kann auch mit vergleichsweise einfachen Sensoren auskommen, so dass ein sehr preiswertes Gerät realisiert wird.

Bei Ausführungsform a handelt es sich um eine bevorzugte Variante für die Vernichtung von Fluginsekten in geschlossenen, nicht zu großen Räumen. Mit der Zeit ist die Wahrscheinlichkeit hoch, dass sich die im Raum befindlichen Fluginsekten durch den Erfassungsbereich bewegen und dort vernichtet werden. Offensichtlich kann dies durch eine geeignete Platzierung der Ausführungsform begünstigt werden. Zusätzlich können bekannte Maßnahmen zum Anlocken von Schädlingen eingesetzt werden.

Auch in dieser vergleichsweise einfachen Ausführungsform können der Verbrauch an Flüssigkeit und eine potenzielle Belästigung von Menschen durch die oben beschriebenen Maßnahmen minimiert werden, z. B. durch Kombination einer Lichtschranke zusammen mit der Erfassung der Frequenz des Flügelschlags von Mücken oder Fliegen.

Ein Beispiel für einen vorteilhaften Einsatz dieser Variante ist im Außenbereich zum Vertreiben oder Vernichten von Wespen, die sich z. B. in einem Rollladenkasten eingenistet haben. Der Balken (1) wird in unmittelbarer Nähe der Öffnung angebracht, durch die die Wespen ein und ausfliegen, so dass er dort anfliegende Wespen vertreibt oder vernichtet.

Ein weiteres Beispiel ist eine Anbringung eines Balkens (1) über einem Türschlitz. Der Balken (1) kann das Eindringen von allgemein Insekten und speziell Ameisen verhindern.

In einer Variante der beschriebenen vereinfachten Ausführungsform kann der Flüssigkeit ein Geruchsstoff vom Typ Raumparfum beigemischt werden, so dass zusammen mit der Vernichtung oder Vertreibung von Schädlingen ein für den Mensch weiterer angenehmer Effekt erzielt wird. Damit hat das Gerät eine Doppelfunktion, nämlich eine Vertreibung oder Vernichtung von Schädlingen und Verbreitung eines Raumduftes.

In einer weiteren Variante kann die Flüssigkeit zusätzlich zum Geruchsstoff oder anstelle dessen ein Repellens enthalten, so dass zusammen mit der Vernichtung oder Vertreibung des getroffenen Schädlings eine Abschreckung weiterer Schädlinge bewirkt wird. Geeignete Repellentien sind beispielsweise N,N-Diethyl-3-methylbenzamid (Handelsname "DEET"), Dimethylphtalat (Handelsname Palatinol M, DMP), 1-Piperidincarbonsäure-2-(2-hydroxyethyl) -1-methylpropylester sowie insbesondere 3-(N-n-Butyl-N-acetyl-amino)-propionsäureethylester (Handelsname Insekt Repellent® 3535 der Fa. Merck). Die Repellentien können sowohl einzeln als auch in Kombination eingesetzt werden.

Bei dieser Art der Ausführungsform können in der Steuerungseinheit Zeiten und Mengen für eine regelmäßig ausgestoßene Flüssigkeitsmenge hinterlegt werden. Mit den bisher aufgeführten Beschreibungen kann der Fachmann die Zusammensetzung der Flüssigkeit und die Größe des Reservoirs an die jeweilige Anwendung anpassen.

Beim Tintenstrahldruck werden Tropfen aus den Düsen auf ein sehr dicht daran befindliches Substrat (typisch Papier) geschossen. Durch die geringe Entfernung (typisch weniger als 0,5 mm) sind kleinere Abweichungen in den Flugrichtungen der Tropfen von verschiedenen Düsen zu verkraften. Für Geräte im Rahmen des Erfindungsgedankens ist dieser Effekt zu berücksichtigen. Dazu werden zwei Ansätze vorgeschlagen. Im ersten Ansatz wird die Flugrichtung jeder einzelnen Düse bei der Herstellung erfasst und in der Steuerung des Balkens hinterlegt. Damit ist der Steuerung die Flugrichtung jedes Tropfens bekannt und kann dies bei der Zielerfassung berücksichtigen. Falls es im Laufe der Zeit eine Drift der Richtungen geben sollte, kann eine Nachkalibrierung vorgenommen werden, beispielsweise im Rahmen einer Wartung. Im zweiten Ansatz wird die räumliche Streuung der Düsen minimiert, beispielsweise durch längere Kanäle zur Tropfenführung.

### Ausführungsform b: Platte

Fig. 2 zeigt ein Gerät entsprechend dem Erfindungsgedanken in Form einer Platte (3), also im Rahmen des Erfindungsgedankens einer zweidimensionalen Anordnung. In einer speziellen Ausführungsform kann beispielsweise die Dicke 5 mm bei einer Fläche von 0,5 m x 0,5 m betragen. Die übrigen Merkmale sind analog zu dem als Ausführungsform a beschriebenen Balkens (1). Dies gilt auch für die dort beschriebenen vielen Varianten.

Hier nun eine Beschreibung von speziellen Eigenschaften und Ausführungsformen der Platte (3):
Analog zum Balken (1) befinden sich auf der Oberseite der Platte eine Vielzahl von sehr kleinen Düsen (2). Die größere Fläche der Platte (3) im Vergleich zum Balken (1) ermöglicht die Unterbringung von deutlich mehr Düsen und so die Erfassung eines größeren Raumbereichs. So können die Düsen sowohl in x-als auch y-Richtung z. B. in einem Abstand von ca. 1 cm angeordnet werden.

Bei einer Fläche von 0,5 m x 0,5 m ergeben sich beispielsweise 2500 Düsen für die gesamte Platte.

Die Richtung, in die die Tropfen von der Platte ausgestoßen werden, wird typisch mit der Konstruktion festgelegt. In den meisten Fällen wird sie senkrecht zur Fläche der Platte sein also in z-Richtung. Um einen größeren Raumbereich zu erfassen, können die Düsen teilweise in unterschiedlichen Winkeln angeordnet werden, beispielsweise mit senkrechter Richtung im Zentrum der Platte und immer weiter nach außen weisender Richtung, je weiter die Düsen im äußeren Bereich liegen, bis zu einem Winkel von ca. 45° am äußersten Rand. Je nach Anwendungszweck sind für den Fachmann weitere Anordnungen einfach zu bestimmen.

Analog zum Balken (1) kann auch Platte (3) bewegt werden, um die Trefferwahrscheinlichkeit zu erhöhen. Bei dieser Bauform wird speziell eine kleine Bewegung in x- und in y-Richtung bevorzugt. Auch ein geringes Neigen der Platte ist möglich. Größere Bewegungen wirken der vorteilhaften kompakten Bauform entgegen.

Wie beim Balken (1) gibt es eine bevorzugte Ausführungsform mit sehr begrenzter Reichweite, einfacher Sensorik und Steuerung sowie gleichzeitiger Aktivierung aller Düsen bei Verwendung einer Flüssigkeit mit Raumduft und/oder Repellens. Durch die zweidimensionale Anordnung der Düsen erreicht die Bauform der Platte (3) einen erheblich größeren Wirkungsbereich als der Balken (1), wie beispielsweise ca. 0,5 m (x-Richtung) x 0,5 mm (y-Richtung) x 5 cm (z- Richtung). Der Fachmann kann je nach Anwendungszweck Rastermaß und Baugröße anpassen bzw. optimieren.

### Ausführungsform c: Halbkugel

Fig. 3 zeigt ein Gerät entsprechend dem Erfindungsgedanken in Form einer Halbkugel (4), also im Rahmen des Erfindungsgedankens einer dreidimensionalen Anordnung. Die Darstellung in Fig. 3 ist ein Schnitt der x-z-Ebene. In einer speziellen Ausführungsform kann der Durchmesser beispielsweise 100 mm betragen.

Bei dieser Ausführungsform sind die Düsen vorzugsweise senkrecht zur Oberfläche ausgerichtet. Durch die Halbkugelform erfasst die Vielzahl der Düsen einen großen Raumbereich. Entsprechend ist es bei dieser Ausführungsform vorteilhaft, die Dichte der Düsen höher zu wählen als bei den vorigen Ausführungsformen, z. B. mit einem Rastermaß von ca. 0,1 bis 0,2 mm.

Auch in dieser Ausführungsform können der erfasste Raumbereich und die Trefferwahrscheinlichkeit durch eine kleine Bewegung der Halbkugel 4 erhöht werden. Hier wird eine kleine Drehbewegung um die in Fig. 3 eingezeichnete z-Achse bevorzugt.

In einer bevorzugten Variante wird diese Ausführungsform als Tischgerät eingesetzt. In einer weiteren bevorzugten Variante hängt die Halbkugel an der Decke (die flache Seite in direktem Kontakt mit der Decke).

### Ausführungsform d: Kanone

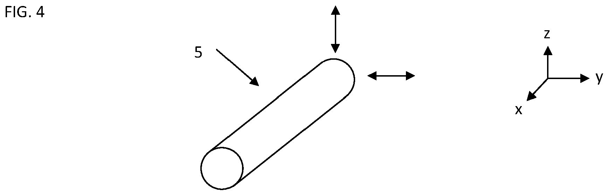

Fig. 4 zeigt ein Gerät entsprechend dem Erfindungsgedanken in Form einer "Kanone" (5). Hier gibt es nur eine einzelne Düse, die in zwei Achsen gedreht werden kann, um das Zielobjekt zu erfassen. Wesentliches Merkmal dieser Ausführungsform ist, dass nur eine einzelne Düse verwendet wird. Diese kann entsprechend aufwändiger gestaltet werden, um insbesondere höhere Anfangsgeschwindigkeiten für die abgeschossenen Tropfen zu erreichen. Außerdem kann die Düse für eine bessere Treffsicherheit ausgestattet werden. Dies geht zu Lasten einer aufwändigeren Aktuatorik und einer aufwändigeren Steuerungseinheit.

Die Erfindung ist nicht auf die vorstehenden Ausführungsformen beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste:

- 1:: Balken
- 2:: Vielzahl von sehr kleinen Düsen
- 3:: Platte
- 4:: Halbkugel
- 5:: "Kanone"

### Verzeichnis der Abbildungen (Figuren):

Fig. 1.: zeigt ein Gerät entsprechend dem Erfindungsgedanken in Form eines Balkens (1), d. h. im Sinne des Erfindungsgedankens einer im Wesentlichen linearen Anordnung.
Fig. 2.: zeigt ein Gerät entsprechend dem Erfindungsgedanken in Form einer Platte (3), also im Rahmen des Erfindungsgedankens einer zweidimensionalen Anordnung.
Fig. 3.: zeigt ein Gerät entsprechend dem Erfindungsgedanken in Form einer Halbkugel (4), also im Rahmen des Erfindungsgedankens einer dreidimensionalen Anordnung.
Fig. 4.: zeigt ein Gerät entsprechend dem Erfindungsgedanken in Form einer "Kanone" (5). Hier gibt es nur eine einzelne Düse, die in zwei Achsen gedreht werden kann, um das Zielobjekt zu erfassen.

## Patentansprüche

1. Vorrichtung zur Vernichtung oder Vertreibung von tierischen Schädlingen, die **dadurch gekennzeichnet ist, dass** sie
a) geeignete Sensoren umfasst, welche zur Erfassung der Position des tierischen Schädlings eingerichtet sind,
b) eine intelligente Steuerungseinheit umfasst, welche so eingerichtet ist, dass an die intelligente Steuerungseinheit die von dem Sensor erfassten Daten übergebbar sind, und
c) eine oder mehrere Düsen umfasst, welche dazu eingerichtet ist beziehungsweise sind, mindestens einen einzelnen sehr kleinen Tropfen zu erzeugen, wobei der einzelne sehr kleine Tropfen dazu vorgesehen ist, den tierischen Schädling zu treffen und dadurch der gewünschte Wirkung der Vertreibung oder Vernichtung zu erzielen.

2. Vorrichtung nach Anspruch 1, **dadurch gekennzeichnet, dass** das Volumen des Tropfens im Bereich von 0,1 pl bis 0,1 ml, insbesondere im Bereich von 1 pl bis 1 µl liegt.

3. Vorrichtung nach Anspruch 1 oder 2, **dadurch gekennzeichnet, dass** eine Vielzahl von kleinen feststehenden Düsen (2), insbesondere Düsen, die aus dem Tintenstrahldruck bekannt sind, verwendet wird, von denen durch eine intelligente Steuerungseinheit entweder
• jeweils nur eine einzelne Düse aktiviert wird, die einen einzelnen Tropfen auf den Schädling schießt, oder
• mehr als eine Düse aktiviert wird, die jeweils einen einzelnen Tropfen auf den Schädling schießen und insbesondere
• bei Anwesenheit eines Schädlings im Wirkungsbereich eine Vielzahl von Düsen gleichzeitig aktiviert werden.

4. Vorrichtung nach einem der Ansprüche 1 bis 3, **dadurch gekennzeichnet, dass** die gewünschte Wirkung der Vertreibung oder Vernichtung durch die kinetische Energie des Tropfens, der vorzugsweise aus reinem Wasser besteht, erzielt wird.

5. Vorrichtung nach einem der Ansprüche 1 bis 3, **dadurch gekennzeichnet, dass** die gewünschte Wirkung der Vertreibung oder Vernichtung durch Zusatz von mindestens einem funktionalen Material, insbesondere einem Insektizid und/oder einem Duftstoff und/oder einem Repellens, zur Flüssigkeit des Tropfens erzielt wird.

6. Vorrichtung nach einem der Ansprüche 1 bis 5, **dadurch gekennzeichnet, dass** die Vorrichtung eine Form aufweist, die ausgewählt ist unter:
a) der Form eines Balkens (1) mit einer linearen Anordnung der Düsen,
b) der Form einer Platte (3) mit einer zweidimensionalen Anordnung der Düsen,
c) der Form einer Halbkugel (4) mit einer dreidimensionalen Anordnung der Düsen und
d) der Form einer Kanone (5) mit nur eine einzelne Düse, die in zwei Achsen gedreht werden kann, um das Zielobjekt zu erfassen.

7. Vorrichtung nach einem der Ansprüche 1 bis 6, **dadurch gekennzeichnet, dass** die räumliche Verteilung der feststehenden Schussrichtungen der Düsen in unterschiedliche Richtungen weist.

8. Vorrichtung nach einem der Ansprüche 1 bis 7, **dadurch gekennzeichnet, dass** Daten von verschiedenen Sensortypen verwendet werden, insbesondere dass akustisch die Anwesenheit einer bestimmten Schädlingsart erfasst wird, während die genaue Position über andere Methoden bestimmt wird, wobei bevorzugt akustisch die charakteristische Frequenz des Flügelschlages von Insekten, besonders bevorzugt von Mücken und Fliegen detektiert wird.

9. Vorrichtung nach einem der Ansprüche 1 bis 8, **dadurch gekennzeichnet, dass** die Vorrichtung entsprechend den Vorgaben der intelligenten Steuerungseinheit in einer oder mehreren Richtungen bzw. Neigungen gering bewegt wird.

10. Vorrichtung nach Anspruch 9, **dadurch gekennzeichnet, dass** der Abschuss des Tropfens oder der Tropfen während einer Bewegung ausgeführt wird, so dass eine zusätzliche Bewegungsrichtung eingestellt wird.

11. Vorrichtung nach einem der vorhergehenden Ansprüche, **dadurch gekennzeichnet, dass** das System in geschlossenen Räumen oder in Außenbereichen eingesetzt wird.

12. Verwendung einer Vorrichtung nach einem der vorhergehenden Ansprüche zurVernichtung oder Vertreibung von tierischen Schädlingen.

13. Verfahren zur Vernichtung oder Vertreibung von tierischen Schädlingen **dadurch gekennzeichnet, dass** man eine Vorrichtung nach einem der vorhergehenden Ansprüche 1-11 einsetzt.

## Claims

1. A device for exterminating or driving away animal pests, which is **characterized in that** it
a) comprises suitable sensors configured to acquire the position of the animal pest,
b) comprises a smart control unit configured in such a way that the data acquired by the sensor is transferrable to the smart control unit, and
c) comprises one or more nozzles configured to produce at least one individual minute droplet, said individual minute droplet being provided to hit the animal pest and thus achieve the desired effect of driving away or extermination.

2. The device as claimed in claim 1, **characterized in that** the volume of the droplet is in the range of 0.1 pl to 0.1 ml, particularly in the range of 1 pl to 1 µl.

3. The device as claimed in claim 1 or claim 2, **characterized in that** use is made of a plurality of small stationary nozzles (2), in particular nozzles known from inkjet printing, of which either
• only a single nozzle, which shoots a single droplet at the pest, is activated in each case, or
• more than one nozzle is activated, each of which shoots a single droplet at the pest, and in particular
• a plurality of nozzles are activated simultaneously when a pest is in range, by a smart control unit.

4. The device as claimed in any one of claims 1 through 3, **characterized in that** the desired effect of driving away or extermination is achieved by the kinetic energy of the droplet, which is preferably composed of pure water.

5. The device as claimed in any one of claims 1 through 3, **characterized in that** the desired effect of driving away or extermination is achieved by adding at least one functional material, in particular an insecticide and/or an aromatic substance and/or a repellent, to the fluid of the droplet.

6. The device as claimed in any one of claims 1 through 5, **characterized in that** the device has a form chosen from among:
a) the form of a bar (1) with a linear arrangement of the nozzles,
b) the form of a plate (3) with a two-dimensional arrangement of the nozzles,
c) the form of a hemisphere (4) with a three-dimensional arrangement of the nozzles, and
d) the form of a gun (5) with only a single nozzle, which can be rotated in two axes in orderto acquire the target object.

7. The device as claimed in any one of claims 1 through 6, **characterized in that** the spatial distribution of the fixed shooting directions of the nozzles goes in different directions.

8. The device as claimed in any one of claims 1 through 7, **characterized in that** use is made of data from different sensor types, in particular that the presence of a certain kind of pest is ascertained acoustically, whereas the exact position is determined by other methods, wherein the characteristic wingbeat frequency of insects, particularly preferably of mosquitos and flies, is preferably acoustically detected.

9. The device as claimed in any one of claims 1 through 8, **characterized in that** the device is moved and/or inclined slightly in one or several directions, according to the specification of the smart control unit.

10. The device as claimed in claim 9, **characterized in that** the droplet or droplets are shot during a movement so that an additional movement direction is set.

11. The device as claimed in any one of the preceding claims, **characterized in that** the system is used in enclosed spaces or in outdoor areas.

12. The use of a device as claimed in any one of the preceding claims for exterminating or driving away animal pests.

13. A method for exterminating or driving away animal pests, **characterized in that** use is made of a device as claimed in any of the preceding claims 1-11.

## Revendications

1. Dispositif en vue de l'extermination ou de l'expulsion de nuisibles animaux, qui est **caractérisé en ce qu'**il
a) comporte des capteurs adéquats qui sont configurés en vue de la saisie de la position du nuisible animal,
b) comporte une unité de commande intelligente, qui est configurée de sorte que sur l'unité de commande intelligente, les données saisies par le capteur sont transmissibles, et
c) comporte une ou plusieurs buses, qui est ou sont configurées afin de générer au moins une unique goutte très petite, sachant que l'unique goutte très petite est prévue afin de toucher le nuisible animal et d'obtenir ainsi l'effet souhaité de l'expulsion ou de l'extermination.

2. Dispositif selon la revendication 1, **caractérisé en ce que** le volume de la goute se trouve dans la zone de 0,1 pl à 0,1 ml, notamment dans la zone de 1 pl à 1 µl.

3. Dispositif selon la revendication 1 ou la revendication 2, **caractérisé en ce qu'**une multitude de petites buses fixes (2), notamment de buses qui sont connues de l'impression à jet d'encre, est utilisée, dont, du fait d'une unité de commande intelligente, soit
• respectivement seulement une buse individuelle est activée, qui tire une goutte individuelle sur le nuisible, soit
• plus d'une buse est activée, qui tirent respectivement une goutte individuelle sur le nuisible, et notamment,
• en cas de présence d'un nuisible dans le champ d'action, une multitude de buses est activée simultanément.

4. Dispositif selon une quelconque des revendications 1 à 3, **caractérisé en ce que** l'effet souhaité de l'expulsion ou de l'extermination est obtenu par l'énergie cinétique de la goutte, qui se compose de préférence d'eau pure.

5. Dispositif selon une quelconque des revendications 1 à 3, **caractérisé en ce que** l'effet souhaité de l'expulsion ou de l'extermination est obtenu par l'addition au liquide de la goutte d'au moins une matière fonctionnelle, notamment un insecticide et/ou un parfum et/ou un répulsif.

6. Dispositif selon une quelconque des revendications 1 à 5, **caractérisé en ce que** le dispositif présente une forme qui est sélectionnée parmi :
a) la forme d'une barre (1) avec une disposition linéaire des buses,
b) la forme d'une plaque (3) avec une disposition bidimensionnelle des buses,
c) la forme d'un hémisphère (4) avec une disposition tridimensionnelle des buses, et
d) la forme d'un canon (5) avec seulement une buse unique qui peut être tournée dans deux axes afin de saisir l'objet ciblé.

7. Dispositif selon une quelconque des revendications 1 à 6, **caractérisé en ce que** la répartition spatiale des directions de tir fixes des buses est orientée dans différentes directions.

8. Dispositif selon une quelconque des revendications 1 à 7, **caractérisé en ce que** des données de différents types de capteurs sont utilisées, notamment **en ce que** la présence d'un certain type de nuisible est saisie acoustiquement, tandis que la position précise est déterminée via d'autres méthodes, sachant que la fréquence caractéristique du battement d'ailes d'insectes est détectée de préférence acoustiquement, et de préférence particulière de moustiques et de mouches.

9. Dispositif selon une quelconque des revendications 1 à 8, **caractérisé en ce que** le dispositif est déplacé légèrement de manière correspondant aux prescriptions de l'unité de commande intelligente dans une ou plusieurs directions et/ou inclinaisons.

10. Dispositif selon la revendication 9, **caractérisé en ce que** l'achèvement de la goutte ou des gouttes est réalisé pendant un mouvement, de sorte qu'une direction de mouvement supplémentaire est réglée.

11. Dispositif selon une quelconque des revendications précédentes, **caractérisé en ce que** le système est mis en oeuvre dans des locaux fermés ou dans des zones extérieures.

12. Utilisation d'un dispositif selon une quelconque des revendications précédentes en vue de l'extermination ou de l'expulsion de nuisibles animaux.

13. Procédé en vue de l'extermination ou de l'expulsion de nuisibles animaux, **caractérisé en ce qu'**on met en oeuvre un dispositif selon une quelconque des revendications 1-11.
